# EUROPÄISCHE PATENTSCHRIFT

(11) **EP 0 302 304 B1**
(45) Veröffentlichungstag und Bekanntmachung des Hinweises auf die Patenterteilung: **08.12.1993**
(21) Anmeldenummer: 88111668.5
(22) Anmeldetag: 20.07.1988
(51) Int. Cl.: C08G 61/12, C09K 3/16, C08J 7/04, H01B 1/12

(54) **Verfahren zur antistatischen Ausrüstung von Kunststoff-Formteilen**
Method for the antistatic finishing of polymeric moulded parts
Procédé de finissage antistatique pour des objets moulés à base de polymères

(30) Priorität: 01.08.1987 DE 3725575; 28.01.1988 DE 3802472
(43) Veröffentlichungstag der Anmeldung: 08.02.1989
(73) Patentinhaber: BAYER AG, 51368 Leverkusen (DE)
(72) Erfinder: Jonas, Friedrich, Dr., D-5100 Aachen (DE); Waldenrath, Werner, Dipl.-Ing., D-5000 Köln 1 (DE)

(56) Entgegenhaltungen:
- DE-A- 3 544 957
- US-A- 4 604 427
- US-A- 4 617 228
- US-A- 4 710 401
- Chemical Abstracts, Vol. 106, 1987, S.61, 34286v = JP-A-61127736

## Beschreibung

Die Erfindung betrifft ein Verfahren zur antistatischen Ausrüstung von Kunststoff-Formteilen, insbesondere Kunststoff-Folien, durch Aufbringen einer transparenten Schicht aus elektrisch-leitfähigen organischen Leitern, vorzugsweise Polypyrrol, auf die Oberfläche von Kunststoff-Formteilen.

Die bekannten organischen Kunststoffe, wie Polyester, Polycarbonate, Polyamide, Polyethylene, Polypropylene u.s.w. sind elektrische Isolatoren; ihr spezifischer Widerstand liegt zwischen 10¹⁰ und 10¹⁸ Ω · cm. Aus diesen Kunststoffen gefertigte Formteile, z.B. Folien, haben den Nachteil, daß sie sich leicht elektrostatisch aufladen. Um diese Aufladung zu vermeiden, hat man verschiedene Verfahren zur antistatischen Ausrüstung der Kunststoffe vorgeschlagen. Da sind zum einen die Verfahren, bei denen die Antistatika (Verbindungen mit elektrischer Leitfähigkeit) in die Kunststoffmassen eingearbeitet werden (siehe z.B. die DE-OS 3 409 462). Diese Verfahren haben jedoch allgemein den Nachteil, daß durch sie die verarbeitungstechnischen und/oder die physikalischen Eigenschaften (z.B. Schlag- und Kerbschlagzähigkeit, Elastizitätsverhalten) der Kunststoffe beeinträchtigt werden. Transparante Kunststoff-Folien, wie sie z.B. für die Verpackung empfindlicher elektrischer oder elektronischer Geräte benötigt werden, lassen sich nach diesem Verfahren nicht herstellen.

Da sind zum anderen die Verfahren, bei denen die Antistatika nur auf die Oberfläche der aus den Kunststoffen hergestellten Formteile aufgebracht werden. Zur Anwendung in diesen Verfahren wurden verschiedenartige Antistatika vorgeschlagen; z.B. ethoxylierte Fettamine, Phosphor- und Schwefelsäureester langkettiger Alkohole und Alkylenpolyglycolether und Salze langkettiger Paraffinsulfonsäuren (siehe z.B. DE-OS 3 435 841); oder Charge-Transfer-Komplexe, die sich z.B. von Tetrathiofilvalen oder Tetracyanochinodiemthan ableiten (siehe DE-OS 3 440 914); oder durch in situ aus Pyrrol auf Kunststoffoberflächen erzeugtes Polypyrrol (siehe z.B. EP-A-0 206 133, EP-A-0 206 414, DE-OS 3 321 281, DE-OS 3 544 957 und US-PS 4 604 427). Aber auch diese Verfahren zur antistatischen Ausrüstung der Oberfläche von Kunststoff-Formkörpern haben schwerwiegende Nachteile. Die Antistatika auf Basis ethoxylierter Amine, Phosphor- und Schwefelsäureester langkettiger Alkohole u.s.w. haben den Nachteil, daß ihre antistatische Wirksamkeit an ganz bestimmte Bedingungen, wie etwa genügend große Luftfeuchtigkeit, gebunden ist. Die Charge-Transfer-Komplexe haben den Nachteil, daß sie thermisch zu empfindlich sind und daß deshalb die mit ihnen ausgerüsteten Kunststoff-Formteile, z.B. Folien, bei thermischer Belastung, wie sie z.B. beim Tiefziehen von Folien für die Herstellung von Verpackungsteilen auftritt, ihre antistatischen Eigenschaften verlieren.

Die verschiedenen Verfahren zur antistatischen Ausrüstung von Kunststoff-Formteilen mit auf die Oberfläche aufgebrachten Schichten von elektrisch-leitenden Polypyrrolen haben folgende Nachteile:
Gemäß dem in der EP-A-0 206 414 beschriebenen Verfahren werden poröse, gemäß dem in der US-PS 4 604 427 beschriebenen Verfahren nichtporöse Kunststoff-Formteile zunächst mit einer Pyrrollösung getränkt; anschließend wird das auf die Oberfläche aufgebrachte Pyrrol durch Behandeln der Kunststoff-Formteile mit der Lösung eines Oxidationsmittels, z.B. einer wäßrigen FeCl₃-Lösung, zu Polypyrrol polymerisiert. Dieses Verfahren ist im technischen Maßstab nicht ausführbar, weil das Oxidations-Bad schon nach kurzem Gebrauch durch schwarze Ausfällungen von aus ausgeschwemmtem Pyrrol entstandenem Polypyrrol unbrauchbar gemacht wird. Die Ausfällungen setzen sich bei einer Weiterverwendung des Bades auf der Kunststoff-Oberfläche ab. Um diese Flecken zu vermeiden, ist man gezwungen, das Oxidationsbad schon nach kursem Gebrauch zu wechseln.

In der EP-A-0 206 133 und den DE-OS 3 321 281 und 3 544 597 ist ein Verfahren zur Erzeugung leitfähiger Polypyrrolschichten auf Kunststoff-Formteilen beschriebenen, gemäß dem die Formteile zunächst mit der Lösung des Oxidationsmittels und anschließend mit dampfförmigem oder in gelöster Form vorliegendem Pyrrol behandelt werden. Nachteilig an diesem Verfahren ist, daß keine festhaftenden, dauerhaft antistatischen Beschichtungen auf den Kunststoff-Formteilen erhalten werden oder aber, daß sich die nach dem Verfahren erhaltenen Kunststoff-Formteile beim Erwärmen auf höhere Temperaturen verfärben.

Nach dem in der DE-OS 3 634 226 beschriebenen Verfahren werden Oxidationsmittel, Pyrrol und wasserlösliches Bindemittel gemeinsam auf die Kunststoff-Fläche aufgebracht. Nach dieser Arbeitsweise sind keine transparenten antistatischen Beschichtungen auf Kunststoff-Formteilen erhältlich.

Es wurde jetzt gefunden, daß es gelingt, auf der Oberfläche von Kunststoff-Formteilen eine transparente, dauerhaft antistatische Schicht von Polypyrrol in technischem Maßstab zu erzeugen, wenn man zum Aufbringen des Polyprrols auf die Kunststoff-Formteile eine bestimmte Kombination aufeinander abgestimmter Verfahrensmaßnahmen anwendet; wenn man nämlich das antistatisch auszurüstende Kunststoff-Formteil zunächst mit der Lösung eines Oxidationsmittels in einem organischen Lösungsmittel und nicht - wie bislang - mit einer wäßrigen Lösung des Oxidationsmittels beschichtet und in dieser Lösung, statt der bislang verwendeten wasserlöslichen Bindemittel, ein in Wasser unlösliches bsw. nur schwer lösliches organisches Bindemittel verwendet; das organische Lösungsmittel aus der Beschichtung entfernt; das mit dem Oxidationsmittel beschichtete Kunststoff-Formteil mit einer Lösung von Pyrrol in einem solchen organischen Lösungsmittel behandelt, das weder das antistatisch auszurüstende Kunststoff-Material löst noch das auf die Kunststoff-Oberfläche aufgebrachte Bindemittel und das Oxidationsmittel; auch nach dieser Behandlung wieder das organische Lösungsmittel aus der auf dem Formteil befindlichen Schicht entfernt und die so erhaltene Beschichtung abschließend durch Waschen mit Wasser von nicht polymer gebundenen anorganischen Verbindungen, z.B. unverbrauchtem Oxidationsmittel, befreit.

Durch diese Kombination aufeinander abgestimmter Maßnahmen werden mit einer transparenten Schicht versehene, dauerhaft antistatisch ausgerüstete Kunststoff-Formteile, z.B. Kunststoff-Folien, in technischem Maßstab herstellbar. Überraschenderweise wurde gefunden, daß die antistatischen Eigenschaften der so erhaltenen Kunststoff-Formteile, auch bei mechanischer und/oder thermischer Belastung, wie sie z.B. bei der Kaltverformung oder beim Tiefziehen von Folien auftritt, nur unerheblich herabgesetzt werden und daß deshalb Kunststoff-Folien auch an den verformten Zonen noch die gewünschten antistatischen Eigenschaften aufweisen. Ferner wurde gefunden, daß eine thermische Nachbehandlung der erfindungsgemäß antistatisch ausgerüsteten Formteile überraschenderweise zu einer Erhöhung der Oberflächenleitfähigkeit führt. Eine Verfärbung der Kunststoff-Formteile beim Erwärmen tritt ebenfalls nicht ein.

Die Erfindung betrifft daher ein Verfahren zur Herstellung von mit einer transparenten Polypyrrol-Schichtantistatisch ausgerüsteten Kunststoff-Formteilen, vorzugsweise Kunststoff-Folien; das Verfahren ist dadurch gekennzeichnet, daß man
1. das Kunststoff-Formteil mit einer Lösung beschichtet, die ein für die oxidative Polymerisation von Pyrrol geeignetes Oxidationsmittel und ein in Wasser nicht oder zumindest nur schwer lösliches organisches polymers Bindemittel in einem organischen Lösungsmittel enthält;
2. das organische Lösungsmittel aus der Beschichtung entfernt;
3. das beschichtete Formteil mit einer Lösung von Pyrrol in einem solchen organischen Lösungsmittel behandelt, in dem der zu beschichtende Kunststoff und die auf diesen aufgebrachten Stoffe, Oxidationsmittel und organisches polymeres Bindemittel, nicht löslich sind;
4. das organische Lösungsmittel aus der Beschichtung entfernt;
5. das beschichtete Kunststoff-Formteil zum Entfernen von nicht polymer gebundenen anorganischen Verbindungen mit Wasser wäscht;
6. das beschichtete Kunststoff-Formteil trocknet und gegebenenfalls
7. einer thermischen Nachbehandlung zur Erhöhung der Haftfestigkeit der Antistatik-Schicht unterwirft.

Das erfindungsgemäße Verfahren eignet sich besonders zur Herstellung antistatisch ausgerüsteter Kunststoff-Folien. Diese Kunststoff-Folien können, wegen ihrer Transparenz und ihrer dauerhaften, auch unter mechanischer und thermischer Belastung beständigen antistatischen Eigenschaften mit Vorteil zur Herstellung von transparenten Verpackungsteilen durch Tiefziehen verwendet werden.

Die einzelnen Verfahrensschritte seien im folgenden näher beschrieben:
Zu 1.:
   Für die oxidative Polymerisation von Pyrrol geeignete Oxidationsmittel sind bekannt und sind beispielsweise in der Veröffentlichung J. Am. Chem. Soc. 85, 454 (1963) beschrieben. Zur Durchführung des erfindungsgemäßen Verfahrens eignen sich besonders AlCl₃, AlCl₃-CuCl₂, Eisen-III-salze wie FeCl₃ und Fe(ClO₄)₃, SbCl₅, MoCl₅, H₂SO₅ und K₂S₂O₈; es können auch Mischungen der genannten Verbindungen verwendet werden. Bevorzugt wird FeCl₃ eingesetzt.
   Zur Durchführung des Verfahrens im technischen Maßstab werden bevorzugt für die oxidative Polymerisation des Pyrrols Salze des dreiwertigen Eisens eingesetzt, die sich von organischen Säuren oder organische Reste aufweisenden anorganischen Säuren ableiten.
   Bei Verwendung dieser Eisensalze wird eine Korrosion der Gefäße und Geräteteile vermieden, in denen bzw. mit denen die erfindungsgemäße Beschichtung der Kunststoff-Formteile vorgenommen wird. Die Korrosion führt zu erheblichen Schwierigkeiten und zwar nicht nur zu einer Schädigung der Gefäße und Geräteteile, sondern auch zu einer Beeinträchtigung der Qualität der Polypyrrolbeschichtung durch die in die Beschichtungslösung gelangten Korrosionsprodukte.
   Als bevorzugt eingesetzte Eisen-III-Salze organische Reste aufweisender-anorganischer Säuren seien beispielsweise die Eisen-III-Salze der Schwefelsäurehalbester von C₁-C₂₀-Alkanolen, z.B. das Fe-III-Salz des Laurylsulfates genannt.
   Als Eisen-III-Salze organischer Säuren seien beispielsweise genannt:
   die Fe-III-Salze von C₁-C₂₀-Alkylsulfonsäuren, wie der Methan- und der Dodecansulfonsäure; aliphatischen C₁-C₂₀-Carbonsäuren wie der 2-Ethylhexylcarbonsäure; aliphatischen Perfluorcarbonsäuren, wie der Trifluoressigsäure und der Perfluoroctansäure; aliphatischen Dicarbonsäuren, wie der Oxalsäure und vor allem von aromatischen, gegenbenenfalls durch C₁-C₂₀-Alkylgruppen substituierten Sulfonsäuren wie der Benzolsulfonsäure, p-Toluolsulfonsäure und der Dodecylbenzolsulfonsäure.
   Es können auch Gemische dieser vorgenannten Fe-III-Salze organischer Säuren eingesetzt werden.
   Geeignete, in Wasser nicht oder zumindest nur schwer lösliche organische polymere Bindemittel sind z.B. in organischen Lösungsmitteln lösliche synthetische organnische Polymere wie Polyvinylacetat, Polycarbonat, Polyvinylbutyral, Polyacrylsäureester, Polymethacrylsäureester, Polystyrol, Polyacrylonitril, Polyvinylchlorid, Polybutadien, Polyisopren, Polyether, Polyester und Silicone; auch in organischen Lösungsmitteln lösliche Copolymere wie Styrol/Acrylsäureester-, Vinylacetat/Acrylsäureester- und Ethylen/Vinylacetat-Copolymerisate können verwendet werden. Bevorzugte Bindemittel sind Polyvinylacetat, Polycarbonat, Poly(meth)acrylsäureester und Copolymerisate der diesen Polymeren zu Grunde liegenden Monomeren.
   Die Auswahl des organischen Lösungsmittels zur Herstellung der Lösung richtet sich nach dem zu beschichtenden Material und dem vorgesehenen Bindemittel. Geeignete Lösungsmittel müssen das Bindemittel und Oxidationsmittel gut lösen, dürfen aber zu keiner Schädigung des zu beschichtetenden Kunststoff-Formteils führen. Als Beispiele für Lösungsmittel mit den geforderten Eigenschaften seien genannt: aliphatische Alkohole wie Methanol, Ethanol, Isopropanol; aliphatische Ketone wie Aceton, Methylethylketon und Cyclohexanon; aliphatische Carbonsäureester wie Essigsäuremethyl- und Essigsäurebutylester; aromatische Kohlenwasserstoffe wie Toluol und Xylol; halogenierte Kohlenwasserstoffe wie Dichlormethan und Dichlorethan, aliphatische Nitrile wie Acetonitril.
   Die einzelnen Lösungsmittel können als solche oder im Gemisch miteinander verwendet werden. In der Praxis haben sich z.B. für die Beschichtung von Polycarbonat-Formteilen Mischungen aus Aceton und Isopropanol (Gewichtsverhältnis 1:2) bewährt.
   Der Gehalt der Beschichtungslösungen an Oxidationsmittel beträgt im allgemeinen 10 bis 200 Gew.-%, bezogen auf das verwendete Bindemittel. Die Gesamtkonzentration an Feststoffen (Oxidationsmittel und Bindemittel) liegt im allgemeinen zwischen 5 und 50 Gew.-%, bezogen auf das Gesamtgewicht der Lösung. Die Gesamtkonzentration der Lösungen hängt von dem angewandten Beschichtungsverfahren ab.
   Geeignete Verfahren zur Beschichtung der antistatisch auszurüstenden Kunststoff-Formteile sind Aufsprühen, Aufrakeln, Bestreichen und Bedrucken (z.B. im Tiefdruck).
   Die Trockenfilmdicke, d.h. die Schichtdicke der aufgebrachten Beschichtung nach dem Trocknen beträgt vorteilhaft 0,1 bis 3,0 µm. Gräßere Schichtdicken können sich nachteilig auf die Transparenz und in einigen Fällen sogar auch nachteilig auf die elektrische Leitfähigkeit der Beschichtungen auswirken.
   Die erfindungsgemäß antistatisch auszurüstenden Kunststoff-Formteile können aus folgenden Kunststoffen hergestellt sein: Polycarbonaten, Polyamiden, Polyurethanen, Polyharnstoffen, Polyestern, Polyethern, Polypropylen, Polyoxyethylen, Polyvinylchlorid, Polymethacrylsäureester, Polystyrol oder Celluloseester und -ether.
Zu 2.:
   Das Entfernen des organischen Lösungsmittels aus der Beschichtung kann durch einfaches Verdunsten oder aber auch durch Erwärmen der Schicht, gegebenenfalls im Vakuum, erfolgen.
Zu 3.:
   Die Behandlung der beschichteten und getrockneten Kunststoff-Formteile mit den Pyrrollösungen erfolgt im allgemeinen bei Raumtemperatur, kann aber auch bei niedrigeren oder höheren Temperaturen vorgenommen werden. Die Auswahl der Lösungsmittel für das Pyrrol richtet sich im allgemeinen nach dem Kunststoff aus dem die Formteile hergestellt sind und dem verwendeten Bindemittel. Das Lösungsmittel darf weder den zu beschichtenden Kunststoff noch das aufgebrachte Lösungsmittel noch das Oxidationsmittel lösen. Lösungsmittel, die diesen Anforderungen entsprechen, sind z.B. aliphatische Kohlenwasserstoffe wie n-Hexan; aromatische Kohlenwasserstoffe wie Benzol oder Toluol; oder fluorierte Kohlenwasserstoffe wie 1,1,2-Trichlortrifluorethan. Es können auch Gemische dieser Lösungsmittel eingesetzt werden. Die Behandlung der beschichteten Materialien mit der Pyrrollösung kann durch Eintauchen in die oder Aufsprühen der Pyrrollösung erfolgen. Die Behandlungsdauer beträgt im allgemeinen weniger als 1 Minute. In den meisten Fällen ist eine Einwirkungszeit von wenigen Sekunden ausreichend.
   Die Konzentration des Pyrrols in den Lösungen liegt vorzugsweise bei 1 bis 50 Gew.-%, vorzugsweise bei 2 bis 10 Gew.-%, bezogen auf das Gewicht des Lösungsmittels.
   Anstelle von Pyrrol können auch andere polymerisierbare 5-Ringheterocyclen wie Thiophene, Furane oder substituierte Pyrrole oder Gemische dieser Verbindungen eingesetzt werden.
Zu 4.:
   Das Lösungsmittel wird durch Verdunsten, gegebenenfalls bei erhöhter Temperatur und/oder unter vermindertem Druck entfernt.
Zu 5.:
   Die fertig beschichteten und getrockneten Kunststoff-Formteile werden anschließend zum Entfernen der nicht polymer gebundenen anorganischen Verbindungen, z.B. des unverbrauchten Oxidationsmittels, mit Wasser gewaschen. Es wurde nämlich gefunden, daß diese nicht polymer gebundenen anorganischen Verbindungen zu einem Abbau des Polymeren, insbesondere bei höheren Temperaturen, führen können. Durch das Auswaschen wird erreicht, daß auch bei thermischer Belastung keine Verfärbung der transparenten Antistatik-Beschichtung auf den Kunststoff-Formteilen eintritt.

Aufgrund der Transparenz und der Beständigkeit der Antistatik-Beschichtung gegen mechanische und thermische Belastung eignen sich die nach dem erfindungsgemäßen Verfahren erhältlichen Kunststoff-Formteile, insbesondere die nach dem erfindungsgemäßen Verfahren erhältlichen Kunststoff-Folien besonders zur Verpackung elektrostatisch empfindlicher Elektronikbauteile und zur Herstellung von Verpackungsteilen durch Tiefziehen.

### Beispiel 1

Eine Lösung aus 0,6 g FeCl₃, 1 g Polyvinylacetat und 19 g Aceton wird auf eine Polyamidfolie mit einem Handcoater aufgerakelt (Naßfilmdicke: etwa 25 µm entsprechend einer Trockenfilmdicke von 1-2 µm). Nach dem Abdunsten des Lösungsmittels (Trocknen) wird die beschichtete Folie 2 Sekunden in eine 5 %ige Lösung von Pyrrol in einem (1:1-) n-Hexan/Toluol-Gemisch eingetaucht. Nach dem Trocknen bei Raumtemperatur wird die beschichtete Folie anschließend mit fließendem Wasser gewaschen bis das Waschwasser praktisch keine Fe³ ⁺-Ionen mehr enthält.

Es wird eine transparente Folie erhalten; Oberflächenwiderstand R_{OB} der Folie: ^{∼} 10⁴ Ω.

Eine gleichwertige Folie wurde erhalten, wenn statt der 0,6 g FeCl₃ 1,0 g FeCl₃ x 6H₂O eingesetzt wurde.

### Beispiel 2

a) Eine Lösung aus 0,5 g FeCl₃, 1 g Polyvinylacetat, 6 g Aceton und 13 g Isopropanol wird mittels Handcoater auf eine Polycarbonatgießfolie aufgerakelt (Naßfilmdicke: etwa 25 µm entsprechend einer Trockenfilmdicke von 1-2 µm). Die weitere Behandlung der beschichteten Folie erfolgt nach der in Beispiel 1 beschriebenen Arbeitsweise.

Es wird eine transparente Folie erhalten; Oberflächenwiderstand R_{OB} der Folie: ^{∼} 10⁴ Ω.
b) Die Folie wurde 30 Sekunden auf 220° C erhitzt. Durch diese thermische Nachbehandlung wurde die Haftfestigkeit der Polypyrrolbeschichtung erhöht; der Oberflächenwiderstand der Folie erhöhte sich durch diese Behandlung nur auf ^{∼} 10⁵ Ω.
c) Bei Alterungsversuchen mit der nicht erhitzten Folie (24 stündiges Aufbewahren bei 100°C) war keine farbliche Veränderung der Folie feststellbar. Wurde jedoch bei der Herstellung der Folie auf den Waschschritt verzichtet, so wies die Folie nach der Alterung eine wesentlich dunklere Farbe auf.
d)Die nicht erhitzte Folie wurde bei Raumtemperatur im Verhältnis 1:3 gereckt. Durch die mechanische Beanspruchung stieg der Oberflächenwiderstand der Folie nur auf ^{∼}10⁶ Ω an. Da der Oberflächenwiderstand antistatisch ausgerüsteter Folien im Bereich von 10² bis 10⁹ Ω zu liegen hat, genügt die Antistatik-Ausrüstung der Folie auch nach der mechanischen Beanspruchung noch voll den in der Praxis gestellten Anforderungen.
e) Die nicht erhitzte Folie wurde auf 200° C erhitzt und gleichzeitig durch Tiefziehen verformt. Selbst an den verformten Stellen betrug der Oberflächenwiderstand der Folie noch 10⁵-10⁷ Ω; d.h. auch die verformten (tiefgezogenen) Stellen, weisen noch die für eine Antistatik-Ausrüstung erforderlichen Werte auf.

### Beispiel 3

Es wurde (a) eine Polyester-Folie und (b) eine Polyethylen-Folie nach der in Beispiel 2a beschriebenen Arbeitsweise beschichtet.

In beiden Fällen wurde eine transparente Folie erhalten;
R_{OB} der Folie (a): ^{∼} 10⁴ Ω.
R_{OB} der Folie (b): ^{∼} 10⁵ Ω.

### Beispiel 4

Eine Lösung aus 0,6 g FeCl₃, 1 g Polymethylmethacrylat und 25 g Aceton wird mittels Handcoater auf eine Polycarbonatfolie aufgerakelt (Naßfilmdicke: 30 µm entsprechend einer Trockenfilmdicke von 1-2 µm). Die beschichtete Folie nach der in Beispiel 2a beschriebenen Arbeitsweise weiterbehandelt.

Es wird eine transparente Folie erhalten; Oberflächenwiederstand R_{OB} der Folie: 5·10⁴ Ω.

### Beispiel 5

Eine Lösung aus 1,0 g FeCl₃, 2,0 g eines handelsüblichen Polycarbonats auf Basis von Bisphenol A, 38 g Dichlormethan und 2 g Acetonitril wird jeweils auf:
(a) eine Polyamidfolie
(b) eine Polyesterfolie
aufgerakelt (Naßfilmdicke: ^{∼} 25 µm entsprechend einer Trockenfilmdicke von 1-2 µm).

Nach dem Abdunsten des Lösungsmittels werden die Folien, wie in Beispiel 1 beschrieben, mit Pyrollösung behandelt, getrocknet, mit Wasser gewaschen und getrocknet.

In beiden Fällen werden transparente, antistatische Folien erhalten;
R_{OB} der Folie (a): 10⁵ Ω
R_{OB} der Folie (b): 10⁶ Ω

### Beispiel 6

Eine Lösung aus 1,0 g Fe-III-Dodecylbenzosulfonat, 1 g Polyvinylacetat, 12 g Isopropanol und 6 g Aceton wird auf eine Polycarbonatfolie mit einem Handcoater aufgerakelt (Naßfilmdicke: etwa 25 µm entsprechend einer Trockenfilmdicke von 1-2 µm) . Nach dem Abdunsten des Lösungsmittels (Trocknen) wird die beschichtete Folie 2 Sekunden in eine 5 %ige Lösung von Pyrrol in einem (1:1-) n-Hexan/Toluol-Gemisch eingetaucht. Nach dem Trocknen bei Raumtemperatur wird die beschichtete Folie anschließend mit fließenden Wasser gewaschen bis das Waschwasser praktisch keine Fe³⁺-Ionen mehr enthält.

Es wird eine transparente Folie erhalten; Oberflächenwiderstand R_{OB} der Folie: 2·10⁴ Ω.

Eine Probe der Folie wurde 5 Sekungen mit einer 180° C heißen Metallplatte in Kontakt gebracht. Der Oberflächenwiderstand der Folie sinkt durch die Temperaturbehandlung auf R_{OB}: 0,3·10⁴ Ω.

Eine gleichwertige Folie wurde erhalten, wenn statt des Fe-III-Dodecylbenzolsulfonates die gleiche Menge Fe-III-p-Toluolsulfonat eingesetzt wurde.

## Patentansprüche

1. Verfahren zur Herstellung von mit einer transparenten Polypyrrol-Schicht antistatisch ausgerüsteten Kunststoff-Formteilen, dadurch gekennzeichnet, daß man
1. das Kunststoff-Formteil mit einer Lösung beschichtet, die ein für die oxidative Polymerisation von Pyrrol geeignetes Oxidationsmittel und ein in Wasser nicht lösliches organisches polymeres Bindemittel in einem organischen Lösungsmittel enthält;
2. das organische Lösungsmittel aus der Beschichtung entfernt;
3. das beschichtete Formteil mit einer Lösung von Pyrrol in einem solchen organischen Lösungsmittel behandelt, in dem der beschichtete Kunststoff und die auf diesen aufgebrachten Stoffe, Oxidationsmittel und organisches polymeres Bindemittel, nicht löslich sind;
4. das organische Lösungsmittel aus der Beschichtung entfernt;
5. das beschichtete Kunststoff-Formteil zum Entfernen der nicht polymer gebundenen anorganischen Verbindungen mit Wasser wäscht;
6. das beschichtete Kunststoff-Formteil trocknet und gegebenenfalls
7. einer thermischen Nachbehandlung unterwirft.

2. Verfahren gemäß Anspruch 1, dadurch gekennzeichnet, daß es sich bei den antistatisch auszurüstenden Kunststoff-Formteilen um Kunststoff-Folien handelt.

3. Verfahren gemäß Anspruch 1, dadurch gekennzeichnet, daß man als in Wasser nicht lösliches organisches polymeres Bindemittel Polyvinylacetat, Poly(meth)acrylsäureester, Polycarbonate oder Copolymerisate der diesen Polymeren zu Grunde liegenden Monomeren verwendet.

4. Verfahren gemäß Anspruch 1, dadurch gekennzeichnet, daß man als in Wasser nicht lösliches organisches polymeres Bindemittel Polyvinylacetat oder Polymethylmethacrylat verwendet.

5. Verfahren gemäß Anspruch 1, dadurch gekennzeichnet, daß man als Oxydationsmittel Salze des dreiwertigen Eisens verwendet.

6. Verfahren gemäß Anspruch 1, dadurch gekennzeichnet, daß man als Oxidationsmittel FeCl₃ oder Salze des dreiwertigen Eisens verwendet, die sich von organischen Säuren oder organische Reste aufweisenden anorganischen Säuren ableiten.

7. Verfahren gemäß Anspruch 1, dadurch gekennzeichnet, daß man als Oxidationsmittel Salze des dreiwertigen Eisens verwendet, die sich von aromatischen, gegebenenfalls durch C₁-C₂₀-Alkylgruppen substituierten Sulfonsäuren ableiten.

8. Verfahren gemäß einem der Ansprüche 1 bis 7, dadurch gekennzeichnet, daß die Schichtdicke der aufgebrachten Beschichtung nach dem Trocknen 0,1 bis 3,0 µm beträgt.

## Claims

1. A process for the production of plastic mouldings antistatically treated with a transparent polypyrrole layer, characterized in that
1. the plastic moulding is coated with a solution containing an oxidizing agent suitable for the oxidative polymerization of pyrrole and a water-insoluble organic polymeric binder in an organic solvent;
2. the organic solvent is removed from the coating;
3. the coated moulding is treated with a solution of pyrrole in an organic solvent in which the coated plastic and the substances applied therero, the oxidizing agent and the organic polymeric binder, are insoluble;
4. the organic solvent is removed from the coating;
5. the coated plastic moulding is washed with water to remove the non-polymer-bound inorganic compounds;
6. the coated plastic moulding is dried and optionally
7. subjected to a thermal aftertreatment.

2. A process as claimed in claim 1, characterized in that the plastic mouldings to be antistatically treated are plastic films.

3. A process as claimed in claim 1, characterized in that polyvinyl acetate, poly(meth)acrylates, polycarbonates or copolymers of the monomers on which these polymers are based is/are used as the water-insoluble organic polymeric binder.

4. A process as claimed in claim 1, characterized in that polyvinyl acetate or polymethyl methacrylate is used as the water-insoluble organic polymer binder.

5. A process as claimed in claim 1, characterized in that salts of trivalent iron are used as the oxidizing agent.

6. A process as claimed in claim 1, characterized in that FeCl₃ or salts of trivalent iron derived from organic acids or from inorganic acids containing organic residues is/are used as the oxidizing agent.

7. A process as claimed in claim 1, characterized in that salts of trivalent iron derived from aromatic optionally C₁₋₂₀-alkyl-substituted sulfonic acids are used as the oxidizing agent.

8. A process as claimed in any of claims 1 to 7, characterized in that the layer thickness of the coating after drying is 0.1 to 3.0 µm.

## Revendications

1. Procédé pour préparer des objets moulés en une matière plastique, munis d'une couche transparente de polypyrrole à rôle anti(électricité) statique, procédé caractérisé en ce que :
1. on soumet l'objet moulé en matière plastique à un revêtement par une solution qui contient un oxydant convenant bien pour produire une polymérisation oxydante du pyrrole et un liant polymère organique non soluble dans l'eau, dans un solvant organique ;
2. on élimine le solvant organique de la couche de revêtement ;
3. on traite l'objet moulé, ainsi revêtu, par une solution de pyrrole dans un solvant organique dans lequel la matière plastique revêtue, et les substances appliquées sur cette matière plastique, l'oxydant et le liant polymère organiques, ne sont pas solubles ;
4. on élimine le solvant organique du revêtement ;
5. on lave à l'eau la pièce moulé en matière plastique revêtue, pour éliminer les composés minéraux qui ne sont pas liés au polymère ;
6. on sèche l'objet moulé en matière plastique, ainsi revêtu, et, éventuellement
7. on soumet cet objet à un post-traitement thermique.

2. Procédé selon la revendication 1, caractérisé en ce qu'il s'agit, pour les objets moulés en une matière plastique comportant un traitement anti(électricité) statique, de feuilles de matière plastique.

3. Procédé selon la revendication 1, caractérisé en ce qu'on utilise, comme liant polymère organique non soluble dans l'eau, du poly(acétate de vinyle), un poly(ester d'acide(meth)acrylique), des polycarbonates ou des copolymères des monomères se trouvant à la base de ces polymères.

4. Procédé selon la revendication 1, caractérisé en ce qu'on utilise, comme liant polymère organique non soluble dans l'eau, du poly(acétate de vinyle) ou du poly(méthacrylate de méthyle).

5. Procédé selon la revendication 1, caractérisé en ce qu'on utilise comme oxydant des sels du fer trivalent.

6. Procédé selon la revendication 1, caractérisé ence qu'on utilise comme oxydant FeCl_{3,} ou des sels du fer trivalent qui dérivent d'acides organiques ou d'acides minéraux présentant des restes organiques.

7. Procédé selon la revendication 1, caractérisé en ce qu'on utilise comme oxydant des sels du fer trivalent qui dérivent d'acides sulfoniques aromatiques, éventuellement substitués par des groupes alkyle en C₁-C₂₀.

8. Procédé selon l'une des revendications 1 à 7, caractérisé en ce que l'épaisseur de la couche appliquée en revêtement est, après le séchage, de 0,1 à 3,0 µm.
